# EUROPÄISCHE PATENTSCHRIFT

(11) **EP 1 516 129 B1**
(45) Veröffentlichungstag und Bekanntmachung des Hinweises auf die Patenterteilung: **07.06.2006**
(21) Anmeldenummer: 03760588.8
(22) Anmeldetag: 27.05.2003
(51) Int. Cl.: F16C 29/06

(54) **LINEARWÄLZLAGER**
LINEAR ROLLER BEARING
ROULEMENT A ROULEAUX LINEAIRE

(30) Priorität: 21.06.2002 DE 10227688
(43) Veröffentlichungstag der Anmeldung: 23.03.2005
(73) Patentinhaber: Schaeffler KG, 91074 Herzogenaurach (DE)
(72) Erfinder: MENGES, Martin, 66424 Homburg (DE); ELICKER, Thomas, 66564 Ottweiler (DE)
(86) Internationale Anmeldenummer: PCT/EP2003/005526
(87) Internationale Veröffentlichungsnummer: WO 2004/001244

(56) Entgegenhaltungen:
- EP-A- 0 494 682
- EP-A- 0 743 465
- US-B1- 6 170 986
- US-B1- 6 352 366

## Beschreibung

Die vorliegende Erfindung betrifft Linearwälzlager, wie sie beispielsweise im Werkzeugmaschinenbau zum Einsatz kommen. Die vorliegende Erfindung betrifft insbesondere Linearführungseinheiten, bei denen derartige Linearwälzlager längsverschieblich an einer Führungsschiene gelagert sind. Bei derartigen Linearführungseinheiten sind zwischen dem Führungswagen des Linearwälzlagers und der Führungsschiene zu beiden Längsseiten der Führungsschiene mindestens jeweils ein Wälzkörperumlauf angeordnet. Im Querschnitt gesehen können beispielsweise vier Reihen tragender Wälzkörperreihen in x- oder auch in o-Anordnung angeordnet sein. Bei derartigen Anordnungen kann der Führungswagen auch Drehmomente um die Längsachse der Führungsschiene aufnehmen.

Aus DE 41 39 026 A1 beispielsweise ist ein Linearwälzlager mit einem an einer Führungsschiene über Rollen wälzgelagerten Führungswagen bekannt geworden, der mit zwei Schenkeln die Führungsschiene umgreift. In jedem Schenkel sind zwei endlose Rollenkanäle für die Rollen vorgesehen. Jeder Rollenkanal umfasst einen Tragkanal für tragende Rollen, einen Rücklaufkanal für rücklaufende Rollen und zwei den Tragkanal und den Rücklaufkanal miteinander verbindende Umlenkkanäle. Der Führungswagen weist die Rücklaufkanäle und Tragkanäle auf. An beiden Stirnseiten des Tragkörpers sind Endglieder angeordnet, die die Umlenkkanäle aufweisen. In dem Tragkörper sind Bohrungen vorgesehen, in denen Rücklaufrohre angeordnet sind. In den Rücklaufrohren sind die Rücklaufkanäle für die Rollen ausgebildet.

Der Rollenkanal umfasst Laufbahnen für die Rollen und Seitenflächen zur seitlichen Begrenzung des Rollenkanals. Die Endglieder weisen zwischen einander zugewandten Endgliedflächen eine konkav gekrümmte äußere Laufbahn des Umlenkkanals auf. Zur einwandfreien Ausrichtung der Rücklaufrohre an den Endgliedern und zur Verhinderung einer freien Drehung der Rücklaufrohre in Löchern der Endgliedern ist vorgesehen, dass die Rücklaufrohre an ihren Enden mit zurückgesetzten Abschnitten und Vorsprüngen ausgerüstet sind, wobei die Endglieder eine komplementäre zweite Profilstruktur aufweisen. Das aus Buchsenhälften zusammengesetzte Rücklaufrohr weist einen halbmond- oder segementförmigen Vorsprung auf, während die zurückgesetzten Stirnflächen einen hufeisenförmigen zurückgesetzten Absatz oder Abschnitt begrenzen.

Die Rücklaufrohre werden in die Endglieder hineingesteckt. An der Stoßstelle zwischen Rücklaufrohr und Endglied kann innerhalb des Rollenkanals ein Versatz vorhanden sein, der sich aufgrund einer ungünstigen Toleranzlage ergibt. Das bedeutet, das Rollen, die beispielsweise aus dem Umlenkkanal herausrollen und in den Rücklaufkanal hineinrollen an der durch diesen Versatz gebildeten Kante verkanten. Dieser Versatz oder diese Kante ist insbesondere an den Seitenflächen zur seitlichen Begrenzung des Rollenkanals kritisch. Denn an diesen Kanten können die Rollen mit ihren stirnseitigen Rändern verkanten. Da in diesem Bereich die Rollen entlastet sind, kann es leicht passieren, dass ein derartiges Verhaken oder Verkanten dazuführt, dass die Rollen aus ihrer vorgesehenen Lage herausdrehen und im ungünstigsten Fall steckenbleiben, so dass ein einwandfreier Umlauf der Rollen nicht mehr möglich ist.

Aufgabe der vorliegenden Erfindung ist es, ein Linearwälzlager nach den Merkmalen des Oberbegriffs des Anspruchs 1 anzugeben, bei dem die Gefahr eines Verkantens oder eines Verhakens deutlich reduziert ist.

Erfindungsgemäß wird diese Aufgabe dadurch gelöst, dass das Rücklaufrohr mit Zungen versehen ist, die in das Endglied eingreifen und mit einander zugewandten Zungenflächen gemeinsam mit den einander zugewandten Endgliedflächen Seitenflächen zur seitlichen Begrenzung des Umlenkkanals bilden, wobei mittels einer Positioniereinrichtung die Zungen mit ihren einander zugewandten Zungenflächen in einer gemeinsamen Ebene mit den einander zugewandten Endgliedflächen des Endgliedes gehalten sind. Erfindungsgemäß ist somit sichergestellt, dass die Rollen mit ihren stirnseitigen Rändern nirgends haken oder verkanten können, wenn sie aus dem Umlenkkanal heraus und in den Rücklaufkanal hineinrollen.

Eine fertigungstechnisch besonders günstige Positioniereinrichtung umfasst: Stützabschnitte, die aneinander abgewandten Zungenseiten der Zungen vorgesehen sind, Positionierabschnitte, die aneinander zugewandten Zungenseiten vorgesehen sind, Anschlagabschnitte, die an dem Endglied vorgesehen sind, wobei die Positionierabschnitte der Zungen an die Anschlagabschnitte des Endgliedes anschlagen, Lagerabschnitte, die an dem Endglied vorgesehen sind wobei die Stützabschnitte der Zungen an den Lagerabschnitten des Endgliedes abgestützt sind. In anderen Worten ausgedrückt, sind die Zungen zwischen den Anschlagabschnitten und den Lagerabschnitten des Endgliedes angeordnet und vorzugsweise eingespannt. Die Zungen werden demzufolge zwischen diese Abschnitte eingeführt und positioniert, so dass die einander zugewandten Zungenflächen in einer gemeinsamen Ebene mit den einander zugewandten Endgliedflächen des Endgliedes angeordnet sind.

Das Endglied kann in bekannter Weise Seitenteile umfassen, an denen die Endgliedflächen ausgebildet sind.

Der Abstand zwischen den Positionierabschnitten und den einander zugewandten Zungenflächen jeder Zunge einerseits und der Abstand zwischen den Anschlagabschnitten und den einander zugewandten Endgliedflächen der Seitenteile anderseits ist derart aufeinander abgestimmt, dass die einander zugewandten Endgliedflächen und die einander zugewandten Zungenflächen in einer gemeinsamen Ebene liegen. Das bedeutet, bei der Herstellung des erfindungsgemäßen Linearwälzlagers ist es im Hinblick auf die Vermeidung des Verkantens der Rollen im Übergang vom Umlenkkanal in den Rücklaufkanal lediglich erforderlich, diese beiden genannten Abstände einwandfrei vorzusehen.

Um sicherzustellen, dass die Zungen mit ihren Positionierabschnitten einwandfrei an die Anschlagabschnitte des Endgliedes zur Anlage gebracht sind, ist es besonders vorteilhaft, zwischen dem Lagerabschnitt des Endgliedes und den Stützabschnitten der Zungen elastisch oder plastisch verformbare Mittel vorzusehen, unter deren Verformung die Zungen zur Anlage gebracht werden.

Diese Mittel können vorzugsweise durch Quetschrippen gebildet sein, die beim Zusammenstecken des Rücklaufrohres mit den Endgliedern plastisch verformt werden, wobei unter der plastischen Verformung die Zungen gegen die Anschlagabschnitte angedrückt werden. Derartige Quetschrippen können einstückig an die Zungen oder an das Endglied angeformt sein. Wenn das Endglied oder das Rücklaufrohr mit einstückig angeformten Zungen im Spritzverfahren aus Kunststoff hergestellt sind, können derartige Quetschrippen problemlos im Werkzeug berücksichtigt werden.

Derartige Quetschrippen sind vorzugsweise keilförmig ausgebildet. Die Keilausbildung erfolgt dann derart, dass beim Zusammenstecken des Rücklaufrohres mit dem Endglied ein verkeilen des Rücklaufrohres mit dem Endglied stattfindet, wobei die Positionierabschnitte der Zungen gegen die Anschlagabschnitte des Endgliedes zur Anlage gebracht werden.

Nachstehend wird die Erfindung anhand eines in insgesamt dreizehn Figuren abgebildeten Ausführungsbeispiels näher erläutert. Es zeigen:
- Figur 1: einen Querschnitt durch ein erfindungsgemäßes Linearwälzlager,
- Figur 2: als Einzelheit ein Rücklaufrohr des erfindungsgemäßen Linearwälzlagers in perspektivischer Darstellung,
- Figur 3: eine Hälfte des Rücklaufrohres aus Figur 2,
- Figur 4: einen teilweisen Längsschnitt durch das erfindungsgemäße Linearwälzlager aus Figur 1,
- Figur 5: in perspektivischer Darstellung einen Teil des Rücklaufrohres und einen Teil des Endgliedes des Linearwälzlagers aus Figur 1,
- Figur 6: das mit dem Endglied verbundene Rücklaufrohr in vereinfachter Darstellung,
- Figur 7: in perspektivischer Darstellung teilweise das Endglied und das Rücklaufrohr,
- Figur 8: eine weitere perspektivische Darstellung des Endgliedes,
- Figur 9: die im Endglied angeordnete Zunge des Rücklaufrohres in vereinfachter Darstellung,
- Figur 10: einen Schnitt entlang der Linie X-X in Figur 9,
- Figur 11: in perspektivischer Darstellung den mittleren Rückhaltesteg als Einzelteil,
- Figur 12: eine Hälfte des mittleren Rückhaltestegs in perspektivischer Darstellung,
- Figur 13: einen Schnitt durch den mittleren Rückhaltesteg in vereinfachter Darstellung entlang der Linie XIII-XIII in Figur 11,
- Figur 14: einen modifizierten mittleren Rückhaltesteg in perspektivischer Darstellung,
- Figur 15: die im Endglied angeordnete Zunge des mittleren Rückhaltestegs aus Figur 14 in vereinfachter Darstellung und
- Figur 16: den im Endglied angeordneten mittleren Rückhaltesteg im Längsschnitt in schematischer Darstellung.

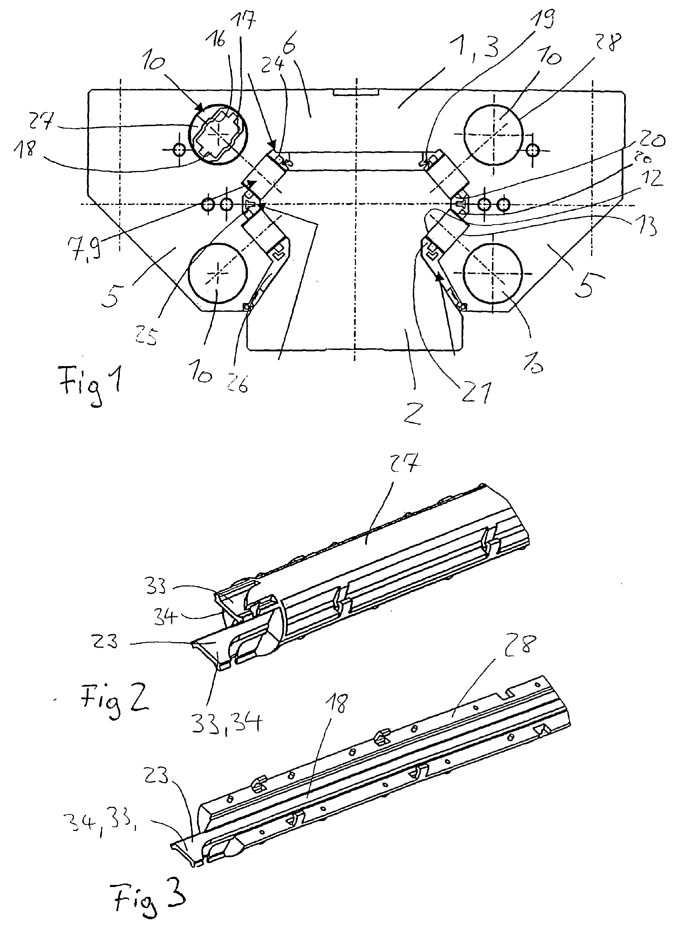

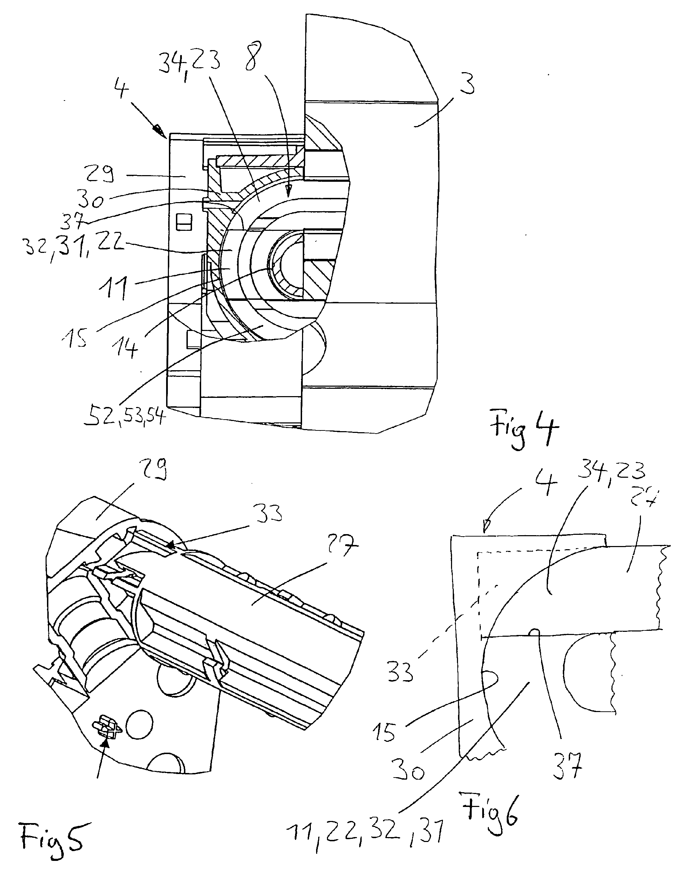

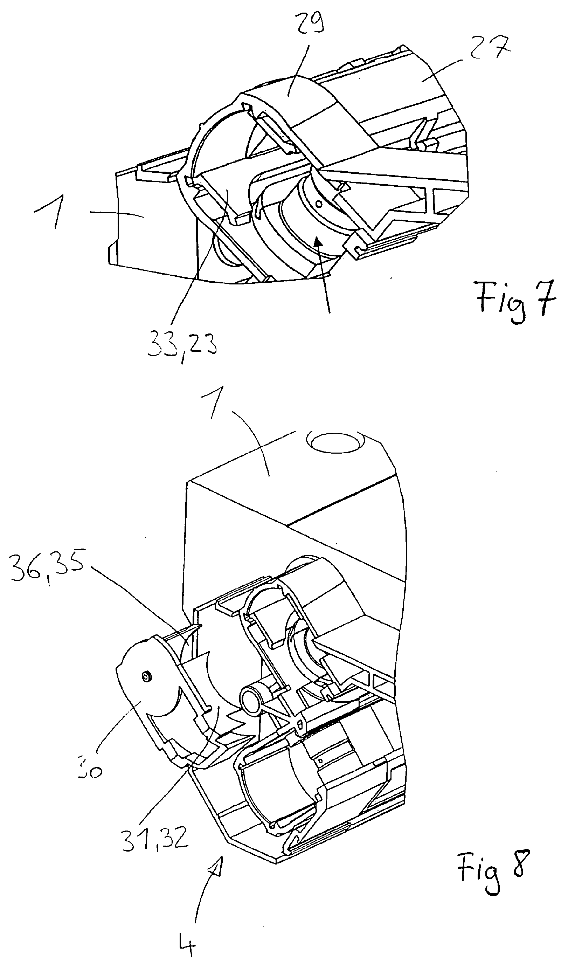

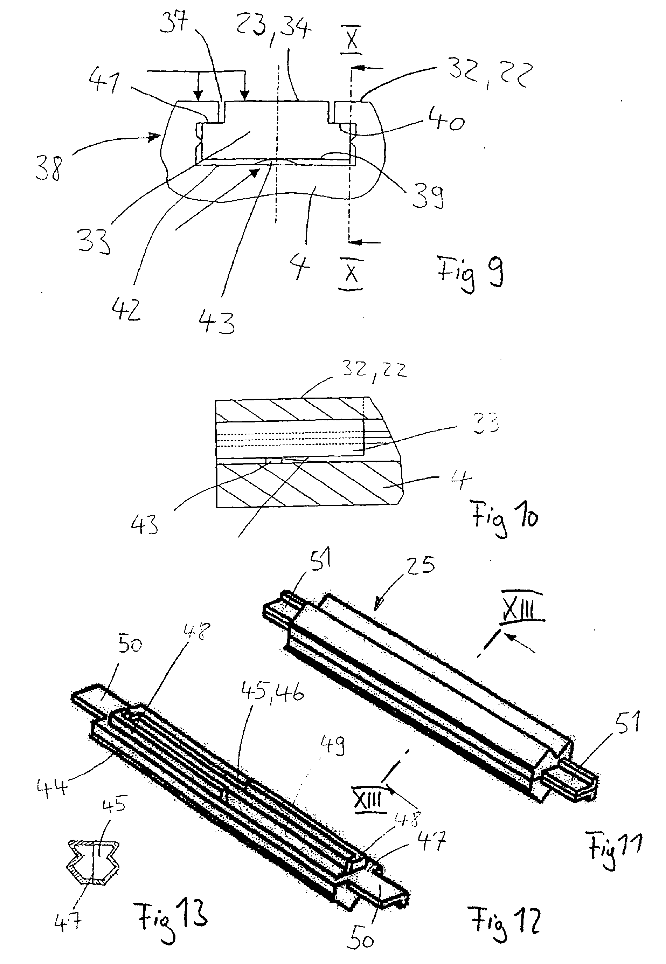

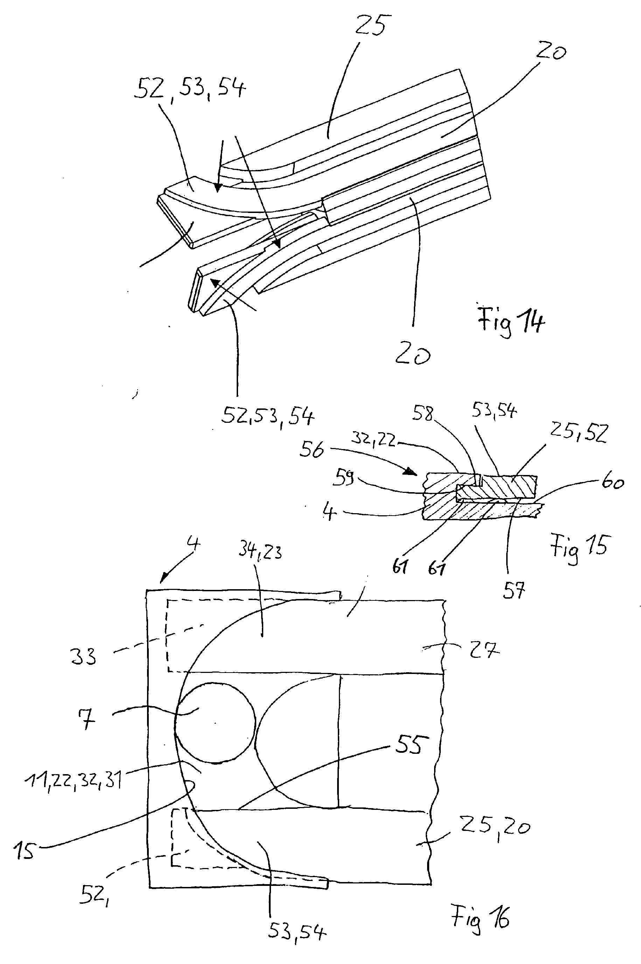

Figur 1 zeigt im Querschnitt eine erfindungsgemäße Linearführung mit einem Führungswagen 1, der auf einer Führungsschiene 2 wälzgelagert ist. Der Führungswagen 1 umfasst einen Tragkörper 3 und Endglieder 4 (siehe Figur 4) wobei die Endglieder 4 an beiden Stirnseiten des Tragkörpers 3 befestigt sind. Der Tragkörper 3 weist zwei Führungsschenkel 5 und einen diese beiden Führungsschenkel 5 einstückig miteinander verbindenden Verbindungssteg 6 auf, und zwar in der Weise, dass ein u-förmiger Tragkörper gebildet ist. Der Führungswagen 1 ist über Rollen 7 an der Führungsschiene 2 längsbeweglich gelagert. Die Rollen 7 sind in Rollenkanälen 8 angeordnet. Jeder Rollenkanal 8 umfasst einen Tragkanal 9 für tragende Rollen 7, einen Rücklaufkanal 10 für rücklaufende Rollen 7, und zwei den Tragkanal 9 und den Rücklaufkanal 10 miteinander verbindende Umlenkkanäle 11. Der Rollenkanal 8 weist Laufbahnen 12, 13, 14, 15, 16, 17 für die Rollen 7 auf. Die Laufbahnen 12 sind an der Führungsschiene 2 ausgebildet. An jeder Längsseite der Führungsschiene 2 sind zwei dieser Laufbahnen 12 in einem Winkel von etwa 90° zueinander angeordnet. Korrespondierende Laufbahnen 13 sind an den beiden Führungsschenkeln 5 des Tragkörpers 3 ausgebildet. Bei dieser Anordnung der Rollen 7 können über den Führungswagen sowohl Kräfte quer zur Führungsschiene 2 als auch Drehmomente übertragen werden. Im Umlenkkanal 11 ist eine konkav gekrümmte äußere Laufbahn 15 und eine konvex gekrümmte innere Laufbahn 14 für die Rollen 7 ausgebildet. Im Rücklaufkanal 10 sind an einander gegenüberliegenden Seiten Laufbahnen 16 und 17 für die Rollen 7 ausgebildet. Ferner umfasst der Rollenkanal 8 Seitenflächen 18, 19, 20, 21, 22, 23, 54 zur seitlichen Begrenzung des Rollenkanals 8 auf. Im Rücklaufkanal 10 sind an einander gegenüberliegende Seiten die Seitenflächen 18 ausgebildet. Im Umlenkkanal 11 sind die Seitenflächen 22, 23, 54 ausgebildet. Im Tragkanal 9 sind die Seitenflächen 19, 20, 21 ausgebildet.

Im Tragkanal 9 sind zu beiden Stirnseiten der Rollen 7 Rückhaltestege 24, 25, 26 angeordnet, die nachstehend unterschieden werden in einen oberen Rückhaltesteg 24, einen mittleren Rückhaltesteg 25 und in einen unteren Rückhaltesteg 26. Die Seitenfläche 19 ist an dem oberen Rückhaltesteg 24 ausgebildet, die Seitenfläche 20 ist an dem mittleren Rückhaltesteg 25 an einer Seite ausgebildet, die dem oberen Rückhaltesteg 24 zugewandt ist. Die Seitenfläche 21 ist an dem unteren Rückhaltesteg 26 ausgebildet und eine weitere Seitenfläche ist an dem mittleren Rückhaltesteg 25 ausgebildet, und zwar an der Seite, die dem unteren Rückhaltesteg 21 zugewandt ist. Die Rückhaltestege 24, 25, 26 umgreifen die Rollen 7 derart, dass diese verliersicher an dem Führungswagen 1 gehalten sind. Dies ist insbesondere dann zweckmäßig, wenn der Führungswagen 1 von der Führungsschiene 2 weggenommen wird.

Ein Rücklaufrohr 27 ist vorgesehen, das eine im Wesentlichen glatte äußere Zylinderfläche aufweist, wobei im inneren des Rücklaufrohres 27 eine Kontur zur Bildung des Rücklaufkanals 10 ausgebildet ist. Der Tragkörper 3 weist insgesamt vier Durchgangsbohrungen 28 auf, in denen je ein Rücklaufrohr 27 eingesetzt ist.

Das Endglied 4 (Figur 4) umfasst ein Kopfstück 29, das an dem Tragkörper 3 befestigt ist. In dem Kopfstück 29 ist eine Umlenkschale 30 angeordnet, dessen Seitenteile 31 an ihren einander zugewandten Seiten mit Endgliedflächen 32 versehen sind, wobei die Endgliedflächen 32 die oben erwähnten Seitenflächen 22 des Umlenkkanals 11 bilden. Zwischen den beiden Seitenteilen 31 einer Umlenkschale 30 ist an der Umlenkschale 30 die äußere konkav gekrümmte Laufbahn 15 ausgebildet.

Die Figuren 2 und 3 zeigen das Rücklaufrohr 27. Das Rücklaufrohr 27 ist aus zwei identischen Längsteilen 28 zusammengesetzt. An beiden Enden des Rücklaufrohres 27 sind jeweils zwei Zungen 33 einstückig angeformt. Einander gegenüberliegende Zungenflächen 34 bilden die oben erwähnten Seitenflächen 23 des Umlenkkanals 11. Dies ist deutlich der Figur 4 zu entnehmen. Die Zungen 33 greifen dabei in das Endglied 4 ein. Figur 5 zeigt das Rücklaufrohr 27 und das Kopfstück 29, wobei das Rücklaufrohr 27 zum Kopfstück 29 hin so ausgerichtet ist, dass die Zungen 33 in das Kopfstück 29 eingeführt werden können.

Figur 7 zeigt das Kopfstück 29 und das Rücklaufrohr 27 mit eingeführten Zungen 33.

Der Figur 8 ist zu entnehmen, dass die Umlenkschale 30 mit Öffnungen 35 versehen ist, die Aufnahmen 36 für die Zungen 33 des Rücklaufrohres 27 bilden.

Figur 6 zeigt skizzenhaft das in das Endglied 4 eingesteckte Rücklaufrohr 27. Andeutungsweise zeigt die Figur 6 die Umlenkschale 30 mit der konkav gekrümmten äußeren Laufbahn 15 und gestrichelt dargestellt eine der Zungen 33 des Rücklaufrohres 27. Die Zungen 34 durchstoßen eine Ebene, in der die konkav gekrümmte äußere Laufbahn 15 angeordnet ist. Das bedeutet, die freien Enden der Zungen 33 sind jenseits dieser Laufbahn 15 angeordnet. Der Figur 6 ist ferner zu entnehmen, dass eine Trennfuge 37 zwischen jeder Zunge 33 und dem Endglied 4 parallel zu dem Rücklaufrohr 27 angeordnet ist. Im konkreten Ausführungsbeispiel ist die Trennfuge 37 von der Zunge 33 und dem Seitenteil 31 der Umlenkschale 30 begrenzt.

Diese geschilderte Verbindung zwischen dem Rücklaufrohr 27 und dem Endglied 4 eignet sich insbesondere bei groß dimensionierten Baureihen. Bei bekannten Linearwälzlagern ist eine Trennfuge zwischen Rücklaufrohr und Endglied quer zur Längsachse des Rücklaufrohres angeordnet. In derartigen Fällen ist die Trennfuge durch das freie Zungenende begrenzt. Wenn bei derartigen bekannten Ausführungen aufgrund einer ungünstigen Toleranzlage das Rücklaufrohr etwas zu kurz gerät, kann die Trennfuge so groß werden, dass es zu unerwünschten Laufgeräuschen und anderen Störungen im Wälzkörperumlauf kommen kann. Bei dem erfindungsgemäßen Linearwälzlager sind derartige Toleranzschwankungen ohne Einfluß auf die Trennfuge, da diese in Längsrichtung zum Rücklaufrohr 27 verläuft. In jedem Fall ist sichergestellt, dass das freie Ende der Zunge 33 jenseits des Umlaufkanals 11 angeordnet ist.

Um sicherzustellen, dass die einander zugewandten Zungenflächen 34 in einer gemeinsamen Ebene mit den einander zugewandten Endgliedflächen 32 des Endgliedes 4 angeordnet sind - wobei die einander zugewandten Zungenflächen 34 und die einander zugewandten Endgliedflächen 32 die Seitenflächen 22 und 23 des Umlenkkanals 11 bilden -, ist eine Positioniereinrichtung 38 vorgesehen.

Figur 9 zeigt eine mögliche konkrete Ausbildung einer Positioniereinrichtung 38. In der konkreten Anordnung umfasst die Positioniereinnrichtung Stützabschnitte 39 die aneinander abgewandten Zungenseiten der Zungen 33 vorgesehen sind, ferner Positionierabschnitte 40 die aneinander zugewandten Zungenseiten vorgesehen sind, ferner Anschlagabschnitte 41, die an dem Endglied 4 vorgesehen sind, wobei die Positionierabschnitte 40 der Zungen 33 an die Anschlagabschnitte 41 des Endgliedes 4 anschlagen, ferner Lagerabschnitte 42, die an dem Endglied 4 vorgesehen sind, wobei die Stützabschnitte 39 der Zungen 33 an den Lagerabschnitten 42 des Endgliedes 4 abgestützt sind.

Vorliegend sind die Stützabschnitte 39 mittelbar über eine Quetschrippe 43 an dem Lagerabschnitt 42 des Endgliedes 4 abgestützt. Die Quetschrippe 43 ist vorliegend einstückig an das Endglied 4 angeformt. Die Quetschrippe 43 ist keilförmig ausgebildet, so dass während des Einschiebens der Zungen 33 diese zunehmend eingekeilt wird zwischen den Positionierabschnitten 41 des Endgliedes 4 und den Quetschrippen 43.

Der Abstand zwischen den Positionierabschnitten 40 der Zunge 33 und der Zungenfläche 34 einerseits und der Abstand zwischen den Anschlagabschnitten 41 des Endgliedes 4 und der Endgliedfläche 32 des Endgliedes 4 andererseits sind derart aufeinander abgestimmt, dass die Endgliedfläche 32 und die Zungenfläche 34 in einer gemeinsamen Ebene liegen. Somit ist sichergestellt, dass die Seitenflächen 22 und 23 des Umlenkkanals 11 in einer gemeinsamen Ebene liegen. Die Rollen 7 können nicht verkanten oder verhaken, sondern laufen vielmehr einwandfrei im Umlenkkanal 11 um. Bei der Herstellung der Seitenflächen 22 und 23 brauchen lediglich die oben erwähnten Abstände einwandfrei eingehalten zu werden. Toleranzschwankungen an anderen Stellen des Endgliedes 4 oder des Rücklaufrohres 27 haben keinen Einfluss auf die Lage der Zungenfläche 34 und der Endgliedfläche 32 zueinander.

Die Figuren 11 bis 13 zeigen den besonders ausgebildeten mittleren Rückhaltesteg 25. Der Rückhaltesteg 25 ist aus zwei identischen Längsteilen 44 gebildet. Die Zweiteilung ist insbesondere dann von Vorteil, wenn Rückhaltestege für große Baureihen vorzusehen sind. In derartigen Fällen können diese Rückhaltestege 200mm und länger ausgebildet sein und einen Querschnitt aufweisen, der 7mm und größer sein kann. Vorzugsweise sind derartige Rückhaltestege aus Kunststoff im Spritzverfahren hergestellt. Bei einteilig ausgeführten Rückhaltestegen kann es beim Abkühlen in der Spritzform zu einem unerwünschten ungleichmäßigen Erstarren der Kunststoffmasse kommen, so dass sich ein unerwünschter Verzug an dem Rückhaltesteg einstellt. Mit dem hier vorgeschlagenen zweiteilig - oder auch drei- oder vierteilig - ausgeführten Rückhaltesteg sind diese Nachteile behoben. Denn die Querschnitte in der Form des Werkzeugs können nun so ausgelegt sein, dass ein unerwünschter Verzug nicht eintritt. Vorzugsweise umschließen die beiden Längsteile 44 entlang ihrer Längserstreckung einen Hohlraum 45, so dass die Wanddicken über dessen Längserstreckung weitgehend konstant sind und jedenfalls so bemessen sind, dass ein einwandfreies Abkühlen ohne unerwünschten Verzug gewährleistet ist. Der Hohlraum ist gebildet durch Ausnehmungen 46, die an den Längsteilen 44 an deren einander zugewandten Teilungsseiten 47 vorgesehen sind. Insbesondere der Figur 12 ist zu entnehmen, dass die Längsteile 44 mit Stegen 48 versehen sind, wobei die Stege 48 beider Längsteile 44 zur Bildung einer Steckverbindung 49 ineinander greifen, um den Rückhaltesteg 25 zu bilden.

Wenn die beiden Längsteile 44 an ihren einander zugewandten Teilungsseiten 47 jeweils mit Vorsprüngen und Ausnehmungen versehen sind, sind je ein Vorsprung und eine Ausnehmung an jedem Längsteil symmetrisch zu einer Quermittellinie des Rückhaltestegs 25 angeordnet. Bei dieser symmetrischen Anordnung können die beiden Längsteile 44 identisch ausgebildet sein und problemlos zusammengesteckt werden.

Jedes Längsteil 44 weist an beiden Enden Teilzapfen 50 auf. Wenn die beiden Längsteile 44 zusammengefügt sind, bilden die zusammengesetzten Teilzapfen 50 jeweils einen Zapfen 51. Die Zapfen 51 werden in entsprechende Zapfenaufnahmen des Endgliedes 4 eingesteckt. Diese Zapfenausbildung und das Einstecken der Zapfen in Aufnahmen trägt zu einer einwandfreien Verbindung der beiden Längsteile des Rückhaltestegs bei.

Figur 14 zeigt in perspektivischer Darstellung den mittleren Rückhaltesteg 25. An seinen Enden weist der Rückhaltesteg 25 Zungen 52 auf, deren Zungenfläche 53 jeweils eine Seitenfläche 54 des jeweiligen Umlenkkanals 11 bilden. Ebenso wie die Zungen 33 des Rücklaufrohres 27 durchstoßen die Zungen 52 die Ebene, in der die konkav gekrümmte äußere Laufbahn 15 des Endgliedes 4 angeordnet ist. Das bedeutet, die freien Enden der Zungen 52 sind jenseits dieser Laufbahn 15 angeordnet. Auch hier ist eine Trennfuge 55 zwischen jeder Zugen 52 und dem Endglied 4 parallel zu dem Rückhaltesteg 25 angeordnet. In konkreten Ausführungsbeispiel ist die Trennfuge 55 von der Zunge 52 und dem Seitenteil 31 der Umlenkschale 30 begrenzt. Auch hier tritt der erfindungsgemäße Vorteil ein, das Toleranzschwankungen in der Länge des Rückhaltestegs 25 keinen Einfluß auf die Breite der Trennfuge 55 haben. Demzufolge können die Rollen 7 einwandfrei mit ihren Stirnseiten den Umlenkkanal 11 passieren.

Um sicherzustellen, dass die Zungenflächen 53 in einer gemeinsamen Ebene mit den Endgliedflächen 32 angeordnet sind, - wobei die Zungenflächen 53 und die Endgliedflächen 32 die Seitenflächen 54 und 22 des Umlenkkanals 11 bilden -, ist eine weitere Positioniereinrichtung 56 vorgesehen.

Figur 15 zeigt in schematischer Darstellung die Anordnung der Zunge 52 des Rückhaltestegs 25 im Endglied 4 mit der Positioniereinrichtung 56. Diese Positioniereinrichtung 56 umfasst einen Stützabschnitt 57, der an der von der Zungenfläche 53 abgewandten Zungenseite der Zunge 52 vorgesehen ist, ferner einen Positionierabschnitt 58, der an der die Zungenfläche 53 aufweisenden Zungenseite der Zunge 52 vorgesehen ist, ferner einen Anschlagabschnitt 59, der an dem Endglied 4 vorgesehen ist, wobei der Positionierabschnitt 58 der Zunge 52 an den Anschlagabschnitt 59 des Endgliedes 4 anschlägt, ferner einen Lagerabschnitt 60, der an dem Endglied 4 vorgesehen ist, wobei der Stützabschnitt 57 der Zunge 52 an dem Lagerabschnitt 60 des Endgliedes 4 abgestützt ist. Vorliegend sind die Stützabschnitte 57 mittelbar über Quetschrippen 61 an dem Lagerabschnitt 60 des Endgliedes 4 abgestützt. Die Quetschrippen 61 sind vorliegend einstückig an das Endglied 4 angeformt. Die Quetschrippen 61 sind keilförmig ausgebildet, so dass während des Einschiebens der Zungen 52 diese zunehmend eingekeilt werden zwischen den Positionierabschnitten 58 des Endgliedes 4 und den Quetschrippen 61.

Der Abstand zwischen den Positionierabschnitten 58 der Zunge 52 und der Zungenfläche 53 einerseits und der Abstand zwischen den Anschlagabschnitten 59 des Endgliedes 4 und der Endgliedfläche 32 des Endgliedes 4 andererseits ist derart aufeinander abgestimmt, dass die Endgliedfläche 32 und die Zungenfläche 53 in einer gemeinsamen Ebene liegen. Somit ist sichergestellt, dass die Seitenflächen 22, 23, 54 des Umlenkkanals 11 in einer gemeinsamen Ebene liegen. Die Rollen 7 können nicht verkanten oder verhaken, sondern laufen vielmehr einwandfrei im Umlenkkanal 11 um. Bei der Herstellung der Seitenflächen 22, 23, 54 brauchen lediglich die oben erwähnten Abstände einwandfrei eingehalten zu werden. Toleranzschwankungen an anderen Stellen des Endgliedes 4 oder des Rückhaltesteges 25 haben keinen Einfluss auf die Lage der Zungenfläche 53 und der Endgliedfläche 32 zueinander.

### Positionszahlenliste

- 1: Führungswagen
- 2: Führungsschiene
- 3: Tragkörper
- 4: Endglied
- 5: Führungsschenkel
- 6: Verbindungssteg
- 7: Rolle
- 8: Rollenkanal
- 9: Tragkanal
- 10: Rücklaufkanal
- 11: Umlenkkanal
- 12: Laufbahn
- 13: Laufbahn
- 14: Laufbahn
- 15: Laufbahn
- 16: Laufbahn
- 17: Laufbahn
- 18: Seitenfläche
- 19: Seitenfläche
- 20: Seitenfläche
- 21: Seitenfläche
- 22: Seitenfläche
- 23: Seitenfläche
- 24: Rückhaltesteg
- 25: Rückhaltesteg
- 26: Rückhaltesteg
- 27: Rücklaufrohr
- 28: Durchgangsbohrung
- 29: Kopfstück
- 30: Umlenkschale
- 31: Seitenteil
- 32: Endgliedfläche
- 33: Zunge
- 34: Zungenfläche
- 35: Öffnung
- 36: Aufnahme
- 37: Trennfuge
- 38: Positioniereinrichtung
- 39: Stützabschnitt
- 40: Positionierabschnitt
- 41: Anschlagabschnitt
- 42: Lagerabschnitt
- 43: Quetschrippe
- 44: Längsteil
- 45: Hohlraum
- 46: Ausnehmung
- 47: Teilungsseite
- 48: Steg
- 49: Steckverbindung
- 50: Teilzapfen
- 51: Zapfen
- 52: Zungen
- 53: Zungenfläche
- 54: Seitenfläche
- 55: Trennfuge
- 56: Positioniereinrichtung
- 57: Stützabschnitt
- 58: Positionierabschnitt
- 59: Anschlagabschnitt
- 60: Lagerabschnitt
- 61: Quetschrippe

## Patentansprüche

1. Linearwälzlager mit einem an einer Führungsschiene (2) über Rollen (7) wälzlagerbaren Führungswagen (1), der mit wenigstens einem endlosen Rollenkanal (8) für die Rollen (7) versehen ist, welcher Rollenkanal (8) einen Tragkanal (9) für tragende Rollen (7), einen Rücklaufkanal (10) für rücklaufende Rollen (7) und zwei den Tragkanal (9) und den Rücklaufkanal (10) miteinander verbindende Umlenkkanäle (11) aufweist, wobei der Führungswagen (1) einen den Rücklaufkanal (10) und den Tragkanal (9) aufweisenden Tragkörper (3) und an beiden Stirnseiten des Tragkörpers (3) angeordnete, die Umlenkkanäle (11) aufweisende Endglieder (4) umfaßt, und wobei der Rücklaufkanal (10) ein Rücklaufrohr (27) umfaßt, und wobei der Rollenkanal (8) Laufbahnen (12, 13, 14, 15, 16, 17) für die Rollen (7) und Seitenflächen (18, 19, 20, 21, 22, 23) zur seitlichen Begrenzung des Rollenkanals (8) aufweist, und wobei das Endglied (4) zwischen einander zugewandten Endgliedflächen (32) eine konkav gekrümmte äußere Laufbahn (15) des Umlenkkanals (11) aufweist, **dadurch gekennzeichnet, daß** das Rücklaufrohr (27) mit Zungen (33) versehen ist, die in das Endglied (4) eingreifen und mit einander zugewandten Zungenflächen (34) gemeinsam mit den einander zugewandten Endgliedflächen (32) Seitenflächen (22) zur seitlichen Begrenzung des Umlenkkanals (11) bilden, wobei mittels einer Positioniereinrichtung (38) die Zungen (33) mit ihren einander zugewandten Zungenflächen (34) in einer gemeinsamen Ebene mit den einander zugewandten Endgliedflächen (32) des Endgliedes 84) gehalten sind.

2. Linearwälzlager nach Anspruch 1, bei dem die Positioniereinrichtung (38) umfaßt:
- Stützabschnitte (39), die an einander abgewandten Zungenseiten der Zungen (33) vorgesehen sind,
- Positionierabschnitte (40), die an einander zugewandten Zungenseiten vorgesehen sind
- Anschlagabschnitte (41), die an dem Endglied (4) vorgesehen sind, wobei die Positionierabschnitte (40) der Zungen (33) an die Anschlagabschnitte (41) des Endgliedes (4) anschlagen
- Lagerabschnitte (42), die an dem Endglied (4) vorgesehen sind, wobei die Stützabschnitte (39) der Zungen (33) an den Lagerabschnitten (42) des Endgliedes (4) abgestützt sind.

3. Linearwälzlager nach Anspruch 2, bei dem die Anschlagabschnitte (41) und die Lagerabschnitte (42) an mit den Endgliedflächen (32) versehenen Seitenteilen (31) des Endgliedes (4) vorgesehen sind.

4. Linearwälzlager nach Anspruch 3, bei dem der Abstand zwischen den Positionierabschnitten (40) und den einander zugewandten Zungenflächen (34) jeder Zunge (33) einerseits und der Abstand zwischen den Anschlagabschnitten (41) und den einander zugewandten Endgliedflächen (32) der Seitenteile (31) andererseits derart aufeinander abgestimmt sind, daß die einander zugewandten Endgliedflächen (32) und die einander zugewandten Zungenflächen (34) in einer gemeinsamen Ebene liegen.

5. Linearwälzlager nach Anspruch 2, bei dem zwischen dem Lagerabschnitt (42) des Endgliedes (4) und den Stützabschnitten (39) der Zungen (33) elastisch oder plastisch verformbare Mittel (43) vorgesehen sind, unter deren Verformung die Zungen (33) mit ihren Positionierabschnitten (40) gegen die Anschlagabschnitte (41) des Endgliedes (4) zur Anlage gebracht sind.

6. Linearwälzlager nach Anspruch 5, bei dem die Mittel gebildet sind durch Quetschrippen (43).

7. Linearwälzlager nach Anspruch 6, bei dem die Quetschrippen (43) einstückig an die Zungen (33) oder das Endglied (4) angeformt sind.

8. Linearwälzlager nach Anspruch 6, bei dem die Quetschrippen (43) keilförmig ausgebildet sind.

## Claims

1. Linear roller bearing having a guide carriage (1) which can be mounted on rolling bearings via rollers (7) on a guide rail (2) and is provided with at least one endless roller channel (8) for the rollers (7), which roller channel (8) has a loadbearing channel (9) for loadbearing rollers (7), a return channel (10) for returning rollers (7) and two deflection channels (11) which connect the loadbearing channel (9) and the return channel (10) to one another, the guide carriage (1) comprising a loadbearing body (3) which has the return channel (10) and the loadbearing channel (9), and having end elements (4) which are arranged at both end sides of the loadbearing body (3) and have the deflection channels (11), and the return channel (10) comprising a return tube (27), and the roller channel (8) having raceways (12, 13, 14, 15, 16, 17) for the rollers (7) and side faces (18, 19, 20, 21,22, 23) for the lateral delimitation of the roller channel (8), and the end element (4) having a concavely curved outer raceway (15) of the deflection channel (11) between mutually facing end-element faces (32), **characterized in that** the return tube (27) is provided with tongues (33) which engage into the end element (4) and, with mutually facing tongue faces (34) together with the mutually facing end-element faces (32), form side faces (22) for the lateral delimitation of the deflection channel (11), the tongues (33) being held with their mutually facing tongue faces (34) in a common plane with the mutually facing end-element faces (32) of the end element (4) by means of a positioning device (38).

2. Linear roller bearing according to Claim 1, in which the positioning device (38) comprises the following:
- supporting sections (39) which are provided on tongue sides of the tongues (33) which face away from one another,
- positioning sections (40) which are provided on mutually facing tongue sides,
- stop sections (41) which are provided on the end element (4), the positioning sections (40) of the tongues (33) coming into contact with the stop sections (41) of the end element (4),
- bearing sections (42) which are provided on the end element (4), the supporting sections (39) of the tongues (33) being supported on the bearing sections (42) of the end element (4).

3. Linear roller bearing according to Claim 2, in which the stop sections (41) and the bearing sections (42) are provided on side parts (31) of the end element (4) which are provided with the end-element faces (32).

4. Linear roller bearing according to Claim 3, in which the spacing between the positioning sections (40) and the mutually facing tongue faces (34) of every tongue (33) on one side and the spacing between the stop sections (41) and the mutually facing end-element faces (32) of the side parts (31) on the other side are adapted to one another in such a way that the mutually facing end-element faces (32) and the mutually facing tongue faces (34) lie in a common plane.

5. Linear roller bearing according to Claim 2, in which elastically or plastically deformable means (43) are provided between the bearing section (42) of the end element (4) and the supporting sections (39) of the tongues (33), the tongues (33) being brought into contact with their positioning sections (40) against the stop sections (41) of the end element (4) by deformation of the said elastically or plastically deformable means (43).

6. Linear roller bearing according to Claim 5, in which the means are formed by crush ribs (43).

7. Linear roller bearing according to Claim 6, in which the crush ribs (43) are formed integrally on the tongues (33) or the end element (4).

8. Linear roller bearing according to Claim 6, in which the crush ribs (43) are of wedge-shaped configuration.

## Revendications

1. Palier à roulement linéaire comportant un chariot de guidage (1) pouvant être monté sur palier à roulement sur un rail de guidage (2) par l'intermédiaire de rouleaux (7), lequel chariot de guidage (1) est pourvu d'au moins un canal de roulement (8) sans fin destiné aux rouleaux (7), lequel canal de roulement (8) présente un canal porteur (9) pour des rouleaux porteurs (7), un canal de retour (10) pour des rouleaux de retour (7) et deux canaux de renvoi (11) reliant le canal porteur (9) et le canal de retour (10) l'un à l'autre, le chariot de guidage (1) comportant un corps porteur (3) présentant le canal porteur (9) et le canal de retour (10) et des éléments d'extrémité (4) présentant les canaux de renvoi (11) disposés des deux côtés frontaux du corps porteur (3), et le canal de retour (10) comportant un conduit de retour (27), et le canal de roulement (8) présentant des voies de roulement (12, 13, 14, 15, 16, 17) destinées aux rouleaux (7) et des surfaces latérales (18, 19, 20, 21, 22, 23) destinées à délimiter latéralement le canal de roulement (8), et l'élément d'extrémité (4) présentant entre les surfaces (32) d'élément d'extrémité tournées l'une vers l'autre une voie de roulement extérieure (15) du canal de renvoi (11) courbée de façon concave, **caractérisé en ce que** le conduit de retour (27) est pourvu de langues (33), lesquelles s'engagent dans l'élément d'extrémité (4) et forment avec des surfaces (34) de langues tournées l'une vers l'autre conjointement avec les surfaces (32) d'élément d'extrémité tournées l'une vers l'autre, des surfaces latérales (22) destinées à délimiter latéralement le canal de renvoi (11), les langues (33) étant maintenues avec leurs surfaces (34) de langues tournées l'une vers l'autre dans un plan commun avec les surfaces (32) d'élément d'extrémité tournées l'une vers l'autre de l'élément d'extrémité (4), au moyen d'un dispositif de positionnement (38).

2. Palier à roulement linéaire selon la revendication 1, dans lequel le dispositif de positionnement (38) comporte :
- des tronçons d'appui (39), lesquels sont prévus sur des côtés de langues détournés l'un de l'autre des langues (33),
- des tronçons de positionnement (40), lesquels sont prévus sur des côtés de langues tournés l'un vers l'autre,
- des tronçons de butée (41), lesquels sont prévus sur l'élément d'extrémité (4), les tronçons de positionnement (40) des langues (33) butant contre les tronçons de butée (41) de l'élément d'extrémité (4)
- des tronçons de palier (42), lesquels sont prévus sur l'élément d'extrémité (4), les tronçons d'appui (39) des langues (33) s'appuyant sur les tronçons de palier (42) de l'élément d'extrémité (4).

3. Palier à roulement linéaire selon la revendication 2, dans lequel les tronçons de butée (41) et les tronçons de palier (42) sont prévus sur des parties latérales (31) de l'élément d'extrémité (4) pourvues des surfaces (32) d'élément d'extrémité.

4. Palier à roulement linéaire selon la revendication 3, dans lequel la distance entre les tronçons de positionnement (40) et les surfaces (34) de langues tournées l'une vers l'autre de chaque langue (33) d'une part et la distance entre les tronçons de butée (41) et les surfaces (32) d'élément d'extrémité tournées l'une vers l'autre des parties latérales (31) d'autre part sont adaptées l'une à l'autre de telle sorte que les surfaces (32) d'élément d'extrémité tournées l'une vers l'autre et les surfaces (34) de langues tournées l'une vers l'autre se trouvent dans un plan commun.

5. Palier à roulement linéaire selon la revendication 2, dans lequel des moyens (43) déformables élastiquement ou plastiquement, dont la déformation amène les langues (33) avec leurs tronçons de positionnement (40) en appui contre les tronçons de butée (41) de l'élément d'extrémité (4), sont prévus entre le tronçon de palier (42) de l'élément d'extrémité (4) et les tronçons d'appui (39) des langues (33).

6. Palier à roulement linéaire selon la revendication 5, dans lequel les moyens sont formés par des nervures d'écrasement (43).

7. Palier à roulement linéaire selon la revendication 6, dans lequel les nervures d'écrasement (43) sont formées d'une seule pièce sur les langues (33) ou sur l'élément d'extrémité (4).

8. Palier à roulement linéaire selon la revendication 6, dans lequel les nervures d'écrasement (43) sont conformées en forme de coin.
